Europäisches Patentamt

European Patent Office

Office européen des brevets

(19)

(11) Numéro de publication: **0 109 405**
**B1**

(12) # FASCICULE DE BREVET EUROPEEN

(45) Date de publication du fascicule du brevet:
**27.01.88**

(51) Int. Cl.⁴: **B 25 J 15/00**

(21) Numéro de dépôt: **83901387.7**

(22) Date de dépôt: **19.05.83**

(86) Numéro de dépôt international:
**PCT/FR 83/00099**

(87) Numéro de publication internationale:
**WO 83/04211 (08.12.83 Gazette 83/28)**

(54) **DISPOSITIF DE PREHENSION D'ARTICLES POUR MANIPULATEUR DU TYPE ROBOT.**

(30) Priorité: **21.05.82 FR 8208899**

(43) Date de publication de la demande:
**30.05.84 Bulletin 84/22**

(45) Mention de la délivrance du brevet:
**27.01.88 Bulletin 88/4**

(84) Etats contractants désignés:
**AT BE CH DE FR GB LI LU NL SE**

(56) Documents cités:
**US - A - 1 475 058**
**US - A - 3 863 976**

(73) Titulaire: **SOCIETE INOV PLASTIC, 19, avenue Vauquelin, F-93470 Coubron (FR)**

(72) Inventeur: **Skovajsa, Joseph, 19, avenue Vauquelin, F-93470 Coubron (FR)**

(74) Mandataire: **Martin, Jean-Jacques et al, Cabinet REGIMBEAU 26, Avenue Kléber, F-75116 Paris (FR)**

ACTORUM AG

# Description

La présente invention concerne les manipulateurs de type robot.

Plus précisément, la présente invention concerne un dispositif de préhension d'articles, et notamment d'articles en matière synthétique, pour manipulateur de type robot.

Comme cela est décrit en particulier dans la demande de brevet Français no 2 424 797, les dispositifs de préhension d'articles pour manipulateurs de type robot jusqu'ici proposés sont formés de pinces de préhension. De telles pinces comportent généralement au moins un mors articulé et un élément d'actionnement commandé par un fluide. Le ou chaque mors articulé est maintenu en position de fermeture ou d'ouverture par des moyens à ressort et peut être écarté ou rapproché par l'élément d'actionnement.

De tels agencements permettent certes de saisir et de maintenir l'article avec une force sensiblement contrôlée, cependant on comprend aisément que, d'une part, de telles pinces ne permettent pas de saisir l'article, à la sortie d'un moule, selon une position précise, et d'autre part, ne permettent pas, par la suite, de transférer cet article selon un positionnement précis. En effet, de telles pinces sont susceptibles de saisir l'article quelle que soit la position de celui-ci.

En particulier, dans le cas du moulage de pièces en matière synthétique, celles-ci se présentent généralement, à la sortie du moule, sous forme d'une embase support allongée, de forme générale tronconique, à l'une des extrémités de laquelle se raccorde sensiblement perpendiculairement une pluralité de tiges sur lesquelles sont rattachés, par l'intermédiaire de pattes de faibles dimensions et aisément sectionnables lesdits articles en question. Ainsi, dans le cas où lesdites pièces doivent être tout d'abord prélevées dans le moule avec précision, et éventuellement déplacées dans celui-ci pour opérer le démoulage, puis amenées dans une position précise et prédéterminée, les pinces préexistantes ne peuvent donner satisfaction. En effet, celles-ci sont susceptibles de saisir ladite embase tronconique en un point quelconque, et selon une inclinaison quelconque, et de plus, une fois saisies, les pièces sont susceptibles de pivoter entre les deux mors, de telle sorte qu'il est tout à fait impossible de connaître avec précision la position de la pièce par rapport à la pince.

Le problème se pose en particulier lorsque lesdites pièces en matière synthétique moulées présentent des portions filetées; on comprend aisément que dans un tel cas, il serait nécessaire d'obtenir un positionnement particulièrement précis des pièces.

Le besoin se fait donc sentir de disposer d'organes de préhension d'articles, en particulier d'articles en matière synthétique moulée, pour des manipulateurs de type robot, qui soient à la fois de réalisation simple, robuste et économique, et qui produisent un positionnement précis des articles. D'autre part, il serait avantageux que lesdits organes de préhension s'adaptent sur les manipulateurs du type robot précédemment existants.

La présente invention vient sur ce point améliorer la situation en proposant un dispositif de préhension d'articles pour manipulateurs de type robot qui se compose d'une pièce apte à être solidarisée sur l'extrémité d'un bras de manipulateur, et qui est muni d'un premier orifice généralement évasé, destiné à recevoir une partie de forme sensiblement correspondante de l'article à saisir, et d'un second orifice d'extension sensiblement normale au premier orifice et débouchant dans celui-ci, ainsi qu'une tige introduite dans le second orifice, dans lequel elle est libre de coulissement, ladite tige étant commandée en déplacement par le manipulateur pour venir en appui contre la portion de l'article introduite dans le premier orifice et immobiliser celle-ci.

Le dispositif de préhension conforme à la présente invention, d'une part, permet de saisir aisément la pièce dans le moule, et ce avec précision, d'autre part maintient fixement celle-ci dans une position relative constante, de telle sorte que la pièce peut être transférée ultérieurement dans une position quelconque choisie, précise et prédéterminée.

Selon un mode de réalisation avantageux de la présente invention, le premier orifice se compose d'une première section tronconique de grand évasement ouvert vers l'extérieur de la pièce, du côté par lequel la portion de l'article est introduite, et d'une seconde section tronconique coaxiale à la première section, de plus faible évasement ouverte vers la première.

Selon une caractéristique de la présente invention, le premier orifice est traversant.

Selon une autre caractéristique de la présente invention, le second orifice est cylindrique. Selon une caractéristique particulière de la présente invention, le second orifice est borgne.

Selon un mode de réalisation avantageux conforme à la présente invention, l'extrémité de la tige dirigée vers le premier orifice est munie d'un alésage transversal semi-tronconique, de même conicité que la seconde section du premier orifice.

D'autres caractéristiques et avantages de la présente invention apparaîtront à la lecture de la description détaillée qui va suivre et en regard des dessins annexés, qui doivent être considérés comme incorporés à la description par la référence qui leur est faite ici, et sur lesquels:

– la figure 1 représente une vue latérale de ladite pièce du dispositif de préhension conforme à la présente invention,

– la figure 2 représente une vue en coupe de la même pièce, selon un plan de coupe référencé II–II sur la figure 1,

– la figure 3 représente une vue latérale de la tige du dispositif de préhension conforme à la présente invention,

– la figure 4 représente une vue partielle conforme à la figure 2, selon une variante de réalisation.

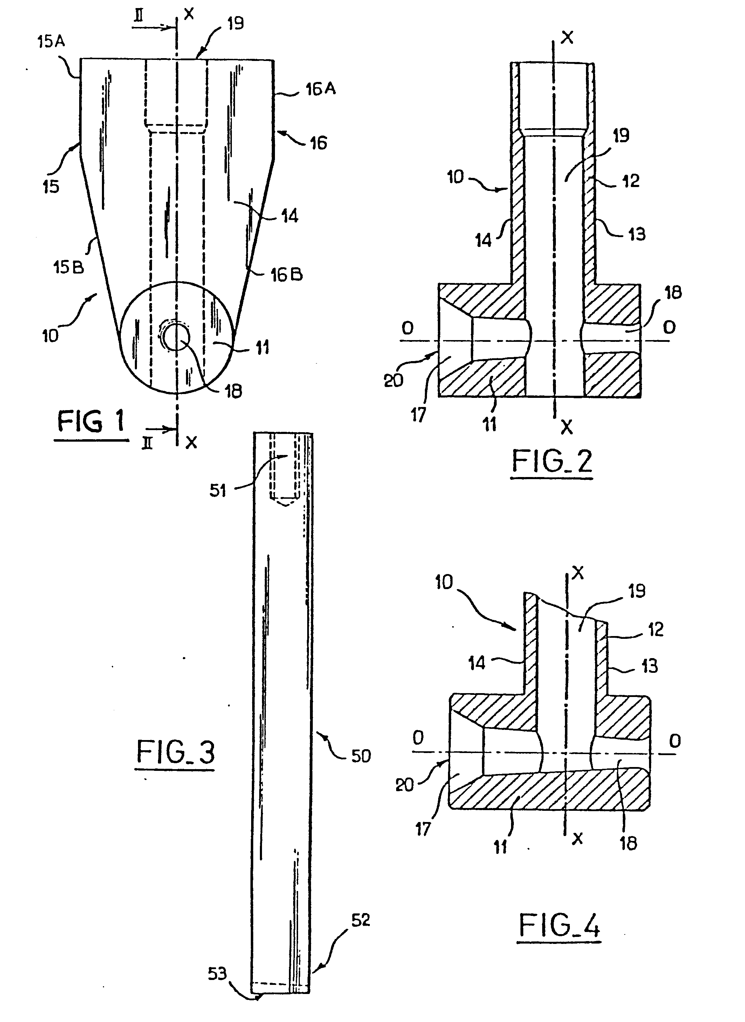

Comme cela apparaît sur les figures 1 et 3, le dispositif de préhension d'articles pour manipulateurs de type robot, conforme à la présente invention, se compose d'une pièce 10 (représentée sur la figure 1) et d'une tige (50) représentée sur la figure 3, qui sont destinées à coopérer.

Plus précisément, comme cela est représenté sur les figures 1 et 2, ladite pièce 10 se compose d'une portion 11 d'enveloppe cylindrique, et d'axe O–O, sur laquelle se raccorde, perpendiculairement, une portion 12. L'enveloppe de cette dernière est délimitée d'une part par deux parois 13 et 14 parallèles entre elles et perpendiculaires à l'axe O–O de la première portion cylindrique 11, et d'autre part, par deux parois 15 et 16 perpendiculaires aux parois 13 et 14 précitées. Chacune des parois 15 et 16 se compose d'une première section 15A, 16A, la plus éloignée de la première portion cylindrique 11 (lesdites premières sections des parois 15 et 16 étant parallèles entre elles, d'écartement supérieur au diamètre de la portion cylindrique 11, et symétriques par rapport à la première portion cylindrique 11), qui se prolonge chacune par une section 15B et 16B, qui vient tangenter la surface cylindrique de la portion 11.

Comme cela apparaît sur la figure 2, la première portion cylindrique 11 comprend un orifice 20 traversant d'axe confondu avec ledit axe O–O. Plus précisément, l'orifice en question se compose d'une première section 17 tronconique, de grand évasement, ouverte vers l'extérieur de la pièce 10, du côté par lequel une portion de l'article à saisir est destinée à être introduite, et d'une seconde section 18, également tronconique, coaxiale à la première section 17, mais de plus faible évasement, ouverte vers la première section 17. On comprend aisément que le grand évasement de la première section 17 a pour but de faciliter l'insertion de ladite portion de l'article à l'intérieur de l'orifice 20.

D'autre part, comme cela apparaît également sur la figure 2, la pièce 10 et plus précisément la seconde portion 12 est munie d'un second orifice 19, d'axe X–X sensiblement perpendiculaire à l'axe O–O de l'orifice précité. Selon le mode de réalisation représenté sur la figure 2, le second orifice 19, tout comme le premier, est traversant. Cependant, comme cela est représenté sur la figure 4, on peut prévoir que ledit second orifice 19 ne traverse pas l'ensemble de la pièce, l'essentiel étant toutefois que ce second orifice 19 débouche dans le premier orifice 20 coaxial à la première portion cylindrique 11. Comme cela apparaît sur la figure 2, le second orifice 19 est cylindrique. Plus précisément, selon le mode de réalisation représenté sur la figure 2, le second orifice 19 se compose de deux sections cylindriques, coaxiales, et de diamètres différents, la section de plus grand diamètre étant disposée à l'opposé de la portion cylindrique 11, pour faciliter l'insertion d'une tige 50, tel que représenté sur la figure 3, à l'intérieur dudit second orifice 19.

Comme cela est représenté sur cette figure 3, la tige 50, de forme générale cylindrique, présente un diamètre légèrement inférieur au diamètre interne de la section de plus faible diamètre du second orifice 19, de telle sorte que cette tige 50 puisse être introduite dans le second orifice 19, libre de coulissement. A l'une de ses extrémités, la tige 50 est de préférence munie d'un alésage borgne fileté intérieurement 51 coaxial avec l'axe de la tige 50, pour autoriser la fixation de ladite extrémité de la tige 50, sur un élément d'actionnement classique du manipulateur robot, de telle sorte que la tige 50 soit commandée en déplacement par translation, par le manipulateur, et plus précisément par ledit élément d'actionnement, à l'intérieur du second orifice 19 de la pièce, pour venir en appui contre la portion de l'article à saisir, introduite dans le premier orifice 20, et immobiliser ainsi cet article. A cette fin, ladite pièce 10 doit également être munie de moyens (non représentés) aptes à la solidariser sur l'extrémité d'un bras du manipulateur. De tels moyens peuvent être constitués par exemple d'alésages traversants filetés, ménagés dans la seconde portion 12, de part et d'autre du second orifice 19, et ce, sensiblement parallèlement à l'axe O–O de la première portion cylindrique.

Bien entendu, les moyens permettant de solidariser d'une part la pièce 10 sur le manipulateur, d'autre part la tige 50 sur un élément d'actionnement de celui-ci pourront prendre de nombreuses formes.

Selon un mode de réalisation avantageux, tel que cela est représenté sur la figure 3, l'extrémité 52 de la tige 50, introduite dans le second orifice 19 de la pièce 10, et par conséquent dirigée vers le premier orifice 20 est munie de préférence d'un alésage transversal 53, semi-tronconique, de même conicité que la seconde section du premier orifice. On comprend aisément qu'une telle disposition a pour but d'augmenter la surface de contact entre l'extrémité de la tige 50 et la portion de l'article introduite dans le premier orifice 20 de la pièce 10, de façon à immobiliser correctement cette portion et faciliter par la suite les manipulations de l'article.

Bien entendu, la présente invention n'est pas limitée aux modes de réalisation qui viennent d'être décrits à partir desquels on pourra envisager de nombreuses variantes de réalisation conformes au cadre de l'invention selon les revendications, notamment la forme particulière du premier orifice 20 sera aisément adaptée, si nécessaire à la forme de l'objet à saisir.

**Revendications**

1. Dispositif de préhension d'articles pour manipulateurs du type robot, caractérisé par le fait qu'il se compose d'une pièce (10) apte à être solidarisée sur l'extrémité d'un bras du manipulateur, et qui est munie d'un premier orifice (20) généralement évasé, destiné à recevoir une partie de forme sensiblement correspondante de l'article à saisir, et d'un second orifice (19) d'extension sensiblement normale au premier orifice (20), et débouchant dans celui-ci, ainsi qu'une tige (50) introduite dans le second orifice (19) dans lequel elle est libre de coulissement, ladite tige (50) étant commandée en déplacement par le manipulateur pour venir en appui contre la portion de l'article introduit dans le premier orifice (20) et immobiliser celle-ci.

2. Dispositif selon la revendication 1, caractérisé par le fait que le premier orifice (20) se compose d'une première section tronconique (17) de grand évasement, ouverte vers l'extérieur de la pièce (10), du côté par lequel la portion de l'article est introduite, et d'une seconde section tronconique (18) coaxiale à la première section (17), de plus faible évasement, ouverte vers la première.

3. Dispositif selon l'une des revendications 1 et 2, caractérisé par le fait que le premier orifice (20) est traversant.

4. Dispositif selon l'une des revendications 1 à 3, caractérisé par le fait que le second orifice (19) est cylindrique.

5. Dispositif selon l'une des revendications 1 à 4, caractérisé par le fait que le second orifice (19) est borgne.

6. Dispositif selon l'une des revendications 2 à 5, caractérisé par le fait que l'extrémité (52) de la tige (60) dirigée vers le premier orifice (20) est munie d'un alésage (53) transversal semi-tronconique, de même conicité que la seconde section (18) du premier orifice (20).

7. Dispositif selon la revendication 6, caractérisé par le fait que l'autre extrémité de la tige (50) est munie d'un alésage borgne fileté (51) coaxial à l'axe de la tige (50), de façon à assurer la fixation de la tige (50) sur un élément d'actionnement approprié du manipulateur.

## Claims

1. Device for gripping articles for robot-type manipulators, characterised by the fact that it consists of a part (10) susceptible of being joined to the end of an arm of the manipulator, and which is provided with a first, generally flared orifice (20), intended to receive a part with a substantially corresponding shape of the article to be gripped, and with a second orifice (19) extending substantially perpendicular to the first orifice (20), and opening into the latter, as well as a rod (50) inserted in the second orifice (19) in which it is free to slide, displacement of the said rod (50) being controlled by the manipulator so as to bear against the portion of the article inserted into the first orifice (20) and to prevent it from moving.

2. Device according to claim 1, characterised by the fact that the first orifice (20) consists of a first truncated conical section (17) strongly flaring, open towards the outside of the part (10), at the side of which the portion of the article is introduced, and a second truncated conical section (18) coaxial with the first section (17), with less strong flaring, open towards the first section.

3. Device according to either of claims 1 and 2, characterised by the fact that the first orifice (20) goes across said part.

4. Device according to any one of claims 1 to 3, characterised by the fact that the second orifice (19) is cylindrical.

5. Device according to any one of claims 1 to 4, characterised by the fact that the second orifice is blind.

6. Device according to any one of claims 2 to 5, characterised by the fact that the end (52) of the rod (50) directed towards the first orifice (20) is provided with a transverse semi-truncated conical bore (53), of the same conicity as that of the second section (18) of the first orifice (20).

7. Device according to claim 6, characterised by the fact that the other end of the rod (50) is provided with a blind threaded bore (51), coaxial with the axis of the rod (50), in a manner to assure fixing of the rod (50) on an appropriate actuating element of the manipulator.

## Patentansprüche

1. Einrichtung zum Greifen von Gegenständen für Manipulatoren vom Robotertyp, dadurch gekennzeichnet, dass sie von einem Teil (10), welches an dem Ende eines Manipulatorarms befestigt werden kann und versehen ist mit einer allgemein erweiterten, ersten Öffnung (20), die dazu dient, einen Teil mit im wesentlichen entsprechender Form des zu ergreifenden Gegenstands aufzunehmen, und mit einer zweiten Öffnung (19), die sich im wesentlichen senkrecht zu der ersten Öffnung (20) erstreckt und in diese mündet, sowie von einer Stange (50) gebildet ist, die in die zweite Öffnung (19) eingeführt und in dieser frei verschiebbar ist, wobei die Stange (50) in Bezug auf eine Verschiebung von dem Manipulator steuerbar ist, um zum Halten gegen den Abschnitt des in die erste Öffnung (20) eingeführten Gegenstands zu kommen und jenen dort festzulegen.

2. Einrichtung nach Anspruch 1, dadurch gekennzeichnet, dass sich die erste Öffnung (20) aus einem ersten, kegelstumpfförmigen Abschnitt (17) grosser Erweiterung, der sich nach ausserhalb des Teils (10) zu der Seite öffnet, von der der Abschnitt des Gegenstands eingeführt wird, und einem zweiten, kegelstumpfförmigen Abschnitt (18) zusammensetzt, der zu dem ersten Abschnitt (17) koaxial ist, eine geringere Erweiterung aufweist und zu dem ersten hin offen ist.

3. Einrichtung nach Anspruch 1 oder 2, dadurch gekennzeichnet, dass die erste Öffnung (20) durchgehend ist.

4. Einrichtung nach einem der Ansprüche 1 bis 3, dadurch gekennzeichnet, dass die zweite Öffnung (19) zylindrisch ist.

5. Einrichtung nach einem der Ansprüche 1 bis 4, dadurch gekennzeichnet, dass die zweite Öffnung (19) blind ist.

6. Einrichtung nach einem der Ansprüche 2 bis 5, dadurch gekennzeichnet, dass das zu der ersten Öffnung (20) gerichtete Ende (52) der Stange (50) mit einer halbkegelstumpfförmigen Querbohrung (53) gleicher Konizität wie der zweite Abschnitt (18) der ersten Öffnung (20) versehen ist.

7. Einrichtung nach Anspruch 6, dadurch gekennzeichnet, dass das andere Ende der Stange (50) mit einer zu der Achse der Stange (50) koaxialen Gewindesackbohrung (51) versehen ist derart, dass die Befestigung der Stange (50) an einem geeigneten Betätigungselement des Manipulators sichergestellt wird.

FIG 1

FIG_2

FIG_3

FIG_4